## Europäisches Patentamt

## European Patent Office

## Office européen des brevets

(11) Veröffentlichungsnummer: **0 079 455**
**B1**

(12) **EUROPÄISCHE PATENTSCHRIFT**

(45) Veröffentlichungstag der Patentschrift:
**17.09.86**

(51) Int. Cl.⁴: **H 02 K 7/116**

(21) Anmeldenummer: **82109143.6**

(22) Anmeldetag: **04.10.82**

(54) **Antrieb für elektrische Schienentreibfahrzeuge.**

(30) Priorität: **12.11.81 DE 3144999**

(43) Veröffentlichungstag der Anmeldung:
**25.05.83 Patentblatt 83/21**

(45) Bekanntmachung des Hinweises auf die Patenterteilung:
**17.09.86 Patentblatt 86/38**

(84) Benannte Vertragsstaaten:
**AT BE CH DE FR GB IT LI NL SE**

(56) Entgegenhaltungen:
**AT - B - 154 719**
**AT - B - 254 257**
**CH - A - 518 208**
**DE - C - 2 514 265**

(73) Patentinhaber: **Thyssen Industrie AG, Am Thyssenhaus 1, D-4300 Essen 1 (DE)**

(72) Erfinder: **Bödeker, Hermann, Flurstrasse 8, D-4330 Mülheim (DE)**
Erfinder: **Piepenbreier, Ernst, Wintgenstrasse 15, D-4300 Essen (DE)**
Erfinder: **Trost, Josef, Altstrasse 25, D-4300 Essen (DE)**

(74) Vertreter: **Jung, Hermann L., Dipl.-Chem., Postfach 1728 Augusta-Allee 10, D-6380 Bad Homburg v.d.H. (DE)**

## Beschreibung

Die Erfindung bezieht sich auf einen Antrieb für elektrische Schienentriebfahrzeuge mit einem den Rotor (Rotorwicklung) auf einer zumindest teilweise hohl ausgebildeten Motorwelle aufweisenden Gehäusemotor, der eine Treibachse über ein Achsgetriebe antreibt, dessen Gehäuse ein grosses Zahnrad auf der Treibachse und damit kämmend ein Ritzel mit einer Ritzelwelle enthält, die zumindest zum Teil in die Motorwelle hineinragt und mit dieser verbunden ist und zumindest am einen Ende in einem Radiallager steckt.

Aus der AT-B-154 719 ist ein derartiger Antrieb bekannt. Bei ihm ist allerdings die Ritzelwelle zwischen dem Getriebe und dem Motor durch eine Kupplung mit Hardy-Scheiben getrennt. Ausserdem ist der Motor in dem Drehgestell oder dem Rahmen aufgehängt, so dass zwischen dem die Bewegungen der Treibachse mitmachenden Getriebe und dem Motor Bewegungsfreiheit vorhanden sein muss. Erreicht wird dies dadurch, dass die Ritzelwelle durch die hohle Motorwelle mit radialem Spiel hindurchlangt und am anderen Ende des Motors durch eine winkelbewegliche Kupplung mit der Motorwelle verbunden ist, so dass die kardanisch ausgelenkt werden kann. Bei schnell laufenden Motoren besteht hier die Gefahr, dass der in dem Motor steckende Teil der Ritzelwelle flattert.

Es ist Aufgabe der Erfindung, einen Antrieb für elektrische Schienentriebfahrzeuge anzugeben, der es ermöglicht, die Achsen des Fahrzeugs durch Einzelmotoren oder die Hälften eines Doppelmotors derart anzutreiben, dass die Zahl der Wellenlager im Motor-Getriebe-Aggregat bei kurzer Gesamtbaulänge verringert werden kann. Dabei sollen sämtliche Wellen einwandfrei zentriert laufen.

Die Aufgabe wird dadurch gelöst, dass das Gehäuse des Motors und das Getriebegehäuse miteinander starr vereint sind und dass die Ritzelwelle auch am anderen Ende in einem Radiallager steckt und die hohle Motorwelle auf deren gesamter Länge stützt, diese beiden Wellen untereinander eine Führungsbüchse aufweisen und miteinander durch eine einzige Antriebsverbindung (Klemmring) lösbar verbunden sind.

Die Aufgabe wird bei einem Antrieb der eingangs genannten Art in dem Falle, wenn die Motorwelle ritzelseitig ein Radiallager aufweist, auch dadurch gelöst, dass das Gehäuse des Motors und das Getriebegehäuse miteinander starr vereint sind, die Motorwelle in einer Bohrung das andere, freie Ende der Ritzelwelle aufnimmt und über eine Führungsbüchse stützt und dass die beiden Wellen miteinander durch eine einzige Antriebsverbindung (Kupplung) lösbar verbunden sind.

Durch die DE-C-2 514 265 ist zwar die starre Verbindung eines Elektromotors mit beidseitigen Winkelgetrieben bekannt. Diese Konstruktion weist aber von der Erfindung abweichende Gattungsmerkmale auf, so dass sie mit ihr im weiteren nicht vergleichbar ist.

Durch die erfindungsgemässe Ausführung ergibt sich vorteilhaft eine lange, ungeteilte Ritzelwelle, die die Motorwelle auf der Ritzelseite führen und mittragen kann, so dass höchstens nur drei Radiallager für die Fahrmotor-Achsgetriebeeinheit benötigt werden. So ist die Zahl der benötigten Lager so niedrig wie nur möglich, und gleichzeitig wird bei Doppelmotoren eine kurze Baulänge erreicht, die es ermöglicht, zum Beispiel den Achsabstand der Drehgestelle zu verkleinern. Durch die Führungsbüchsen wird ausserdem die Führung der Motor- und der Ritzelwelle weiter verbessert und erreicht, dass sich Motor- und Ritzelwelle als statisch bestimmt gelagertes Gesamtsystem verhalten. Es ergibt sich eine leichte und einfache Demontage von Motor und Getriebe durch Lösen der Antriebsverbindung mit nachfolgendem Herausziehen der Ritzelwelle aus der Hohlwelle. So ist trotz der kompakten Ausbildung der Motor-Ritzelwelleneinheit, die zweckmässig durch Kraftschluss der Antriebsverbindung erreicht wird, ein leichter und einfacher Austausch sowohl des Motors als auch des Achsgetriebes möglich.

Wenn die lösbare Antriebsverbindung in einer Kupplung besteht, ist es möglich, diese drehelastisch auszubilden. Diese Lösung wird insbesondere dann verwandt, wenn die Ritzelwelle nicht in ganzer Länge durch die hohle Motorwelle hindurchreicht, sondern nur in einer Ausdrehung der Motorwelle geführt ist. Diese Bauform ist etwas länger als die Ausführung mit einer langen Ritzelwelle, die durch die hohle Motorwelle hindurchreicht, besitzt aber den Vorteil, dass über die Kupplung eine Drehelastizität erreicht werden kann. Vorteilhaft ist die kraftschlüssige Antriebsverbindung auf der dem Ritzel gegenüberliegenden Seite des Fahrmotors angeordnet. So ergibt sich eine Ritzelwelle von grösstmöglicher Länge.

Zweckmässig ist die Motor-Ritzelwelleneinheit auf der Seite des Ritzels im Achsgetriebegehäuse gelagert. So ergibt sich die erfindungsgemäss besonders kurze Bauart mit einer statisch bestimmt gelagerten Ritzelwelle, die einen grossen Lagerabstand aufweist.

In weiterer Ausgestaltung der Erfindung ist vorgesehen, dass der Fahrmotor als Doppelmotor ausgebildet ist. Bei einer Ausbildung des Fahrmotors als Doppelmotor ist es möglich, entsprechend dem bekannten Antrieb, aus einem Motorgehäuse heraus zwei Treibachsen gleichzeitig anzutreiben. Erfindungsgemäss kann dabei auf eine Längsverschiebungen zulassende Kupplung verzichtet und die Gesamtbaulänge verkürzt werden.

In weiterer Ausgestaltung der Erfindung ist vorgesehen, dass der Antrieb ein Axiallager, insbesondere ein zweireihiges Schulterlager zur Axialeinstellung der Motor-Ritzelwelleneinheit aufweist. Durch das Axiallager kann das Kegelradritzel vorteilhaft exakt eingestellt werden, wobei ausgenutzt wird, dass eine relativ grosse Axialverschiebung zwischen Ständer und Läufer des Motors möglich ist. Durch eine Anordnung des Axiallagers am Ritzel ergibt sich, dass eine Ausdehnung der Motor-Ritzelwelleneinheit durch Erwärmung im Betrieb die Einstellung des Ritzels vorteilhaft nicht verändert. Eine Ausdehnung erfolgt nur vom Ritzellager aus in Richtung auf das zweite Radiallager, das als Loslager ausgebildet ist. Durch die gewählte Anordnung kann also ohne nachteilige Folgen für das Betriebsverhalten des erfindungsgemässen Antriebs auf eine Kupplung zwischen Motor und Achsgetriebe verzichtet werden. Sowohl die korrekte Lage des Ritzels als auch die verspannungsfreie Lagerung der Ritzel-Motorwelleneinheit sind stets gewährleistet.

In anderer Ausgestaltung der Erfindung ist vorgesehen, dass Fahrmotor- und Treibachse parallel zueinander angeordnet sind, wobei das Achsgetriebe als pfeilverzahntes Getriebe ausgebildet ist, dessen Zahnräder insbesondere geteilt ausgeführt sind. Durch die Parallelanordnung wird vorteilhaft die Möglichkeit geschaffen, für besondere Einsatzfälle eine Motoranordnung parallel zur Antriebsachse mit den erfindungsgemässen Vorteilen, d.h. ohne Kupplung und mit nur zwei Lagern, vorzusehen. Trotz der Pfeilverzahnung ergibt sich eine gute Montier- und Demontierbarkeit durch die geteilte Ausführung des Ritzels. Auch hier ist die Motor-Ritzelwelleneinheit statisch bestimmt gelagert. Es ist dabei von besonderem Vorteil, dass die Axialführung durch die Pfeilverzahnung selbsttätig erfolgt, so kann das Axiallager entfallen. Ausgehend von der Mitte der Pfeilverzahnung kann sich die Motor-Ritzelwelleneinheit bei Erwärmung frei dehnen, so dass keinerlei Axialkräfte auf die Verzahnung wirken.

Die Erfindung wird anhand von Zeichnungen näher erläutert, aus denen weitere vorteilhafte Einzelheiten zu entnehmen sind.

Im einzelnen zeigen im Schnitt:

Fig. 1 eine Achsgetriebe-Motoreinheit mit durchgehender Ritzelwelle

Fig. 2 eine Achsgetriebe-Motoreinheit mit drehelastischer Kupplung und

Fig. 3 eine Achsgetriebe-Motoreinheit in Parallelanordnung.

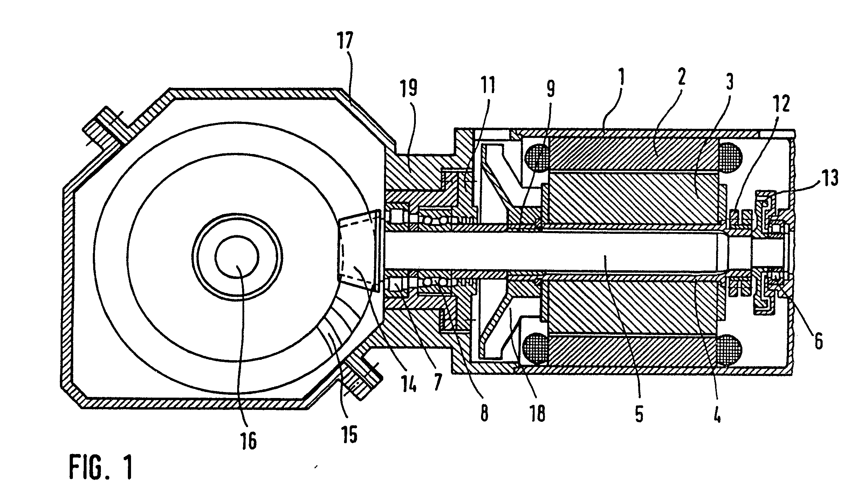

In Fig. 1 bezeichnet 1 das Motorgehäuse, das als Gehäuse eines Monoantriebs, aber ebenso auch als Hälfte eines Bi-Motorantriebs in Monoblockbauweise, wie er z.B. für den Nahverkehr besonders geeignet ist, ausgeführt sein kann.

Wenn es sich um einen Bi-Motorantrieb in Monoblockbauweise handelt, ist eine Abstützung nicht erforderlich, da die beiden Seiten des Monoblocks von den Achsgetrieben gehalten werden. Anderenfalls erfolgt eine Abstützung des Motorgehäuses im Schwerpunkt der Achsgetriebe-Motoreinheit, also an der Achsgetriebeseite des Fahrmotors.

In dem Fahrmotor 1 befinden sich die Ständerwicklung 2 und die Rotorwicklung 3, die auf der Hohlwelle 4 angeordnet ist. Die Hohlwelle 4 umgibt die Ritzelwelle 5 und ist mit dieser über den Doppelkonusring 12 an dem dem Ritzel entgegengesetzten Ende lösbar verbunden. Die Ritzelwelle 5 ist in den Radiallagern 6 und 7 statisch bestimmt gelagert und über das Axiallager 8 axial fest. Die Hohlwelle 4 des Motors 1 ist nicht in Kugellagern gelagert, sondern stützt sich über die Führungsbüchse 9 und die Berührungsstelle unter dem Doppelkonusring auf der Ritzelwelle 5 ab, so dass auch sie auf der Ritzelwelle statisch bestimmt gelagert ist. Die Lager 6 und 7 sind durch ein Labyrinth 13 und auf der Ritzelseite durch ein Labyrinth in dem Flansch 11 gegenüber der Stänger- und Rotorwicklung abgedichtet. Zur Kühlung des Motors dient der Lüfter 18.

Die Treibachse 16 steht direkt mit dem Kegelrad 15 in Verbindung, das durch das Ritzel 14 angetrieben wird. Zur Aufnahme der Ritzellagerung weist das Achsgetriebegehäuse 17 einen Hals 19 auf, der mit dem Motorgehäuse 1 verflanscht ist. So entsteht eine in bisher unerreichter Weise kompakte Antriebseinheit, die unter Verzicht auf eine Kupplung einen bei allen Beanspruchungen einwandfreien Betrieb gewährleistet.

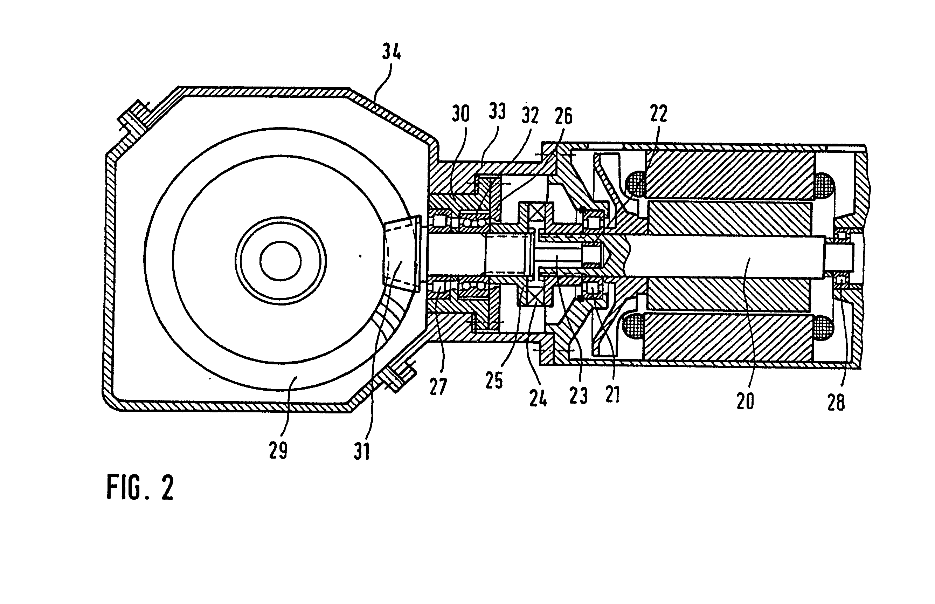

Fig. 2 zeigt eine etwas länger bauende drehelastische Ausführung, bei der eine nur teilweise hohle Motorwelle verwendet wird. Die Motorwelle 20 ist in den Lagern 21 und 28 gelagert und weist in ihrem ritzelseitigen Teil eine Bohrung auf, in die das Ende 23 der Ritzelwelle eingeschoben ist und über die Büchse 22 geführt gehalten wird. Zwischen der Motorwelle 20 und der Ritzelwelle 23 ist eine Kupplung 24 angeordnet, die für eine drehelastische Verbindung zwischen Motorwelle 20 und Ritzelwelle 23 sorgt.

Das Kegelrad 29 und das Ritzel 31 sind in dem Achsgetriebegehäuse 34 angeordnet, das ebenso einen flanschartigen Hals 33 aufweist, wie das Achsgetriebegehäuse in Fig. 1. Der Hals 33 ist jedoch, um die Kupplung 24 unterzubringen, länger ausgebildet. Im Inneren des Achsgetriebehalses 33 ist ebenfalls ein Lagerträger 30 eingeschoben, der über den Deckel 26 ein Axiallager 32 und ein Radiallager 27 hält. Die Kupplung 24 ist mit der Ritzelwelle 23 durch eine aufgeschraubte Büchse 25 verbunden.

Auch diese Ausführung kann sowohl als Einzelmotorausführung mit einer Abstützung im Schwerpunkt als auch als Bi-Motorausführung in Mono-Blockbauweise ausgebildet sein.

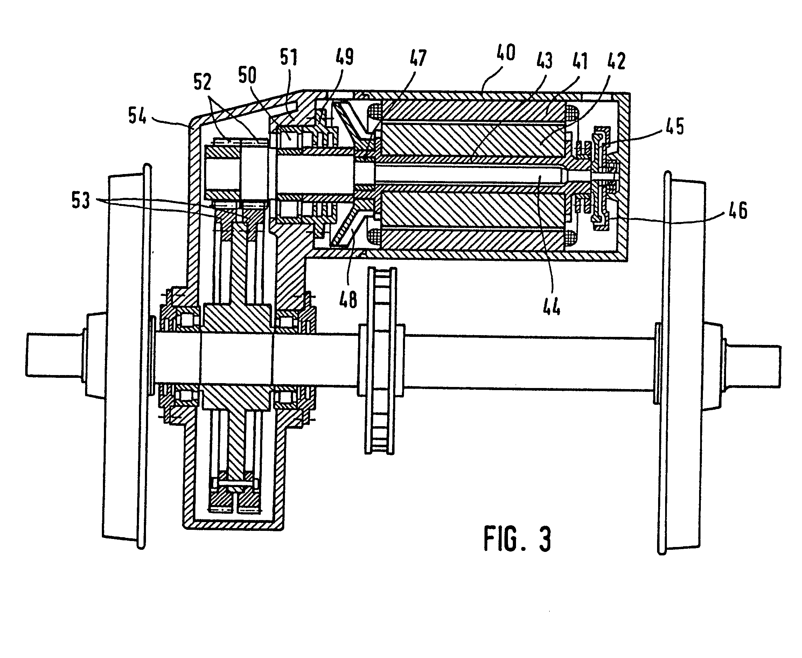

In Fig. 3, die die Ausführung mit parallel zur Antriebsachse liegendem Fahrmotor zeigt, bezeichnet 44 die Ritzelwelle, die auch hier in der Hohlwelle 43 der Rotorwicklung 42 angeordnet ist. Aussen wird der Motor 40 durch ein Gehäuse abgeschlossen, das die Ständerwicklung 41 umschliesst. Das Lager auf der dem Ritzel entgegengesetzten Seite ist ebenfalls durch ein Labyrinth aus den Teilen 45 und 46 abgeschlossen. Ebenso erfolgt auf der ritzelseitigen Seite vor dem Lüfter 48 die Abdichtung durch das Labyrinth 49. Die Lagerung der Motor-Ritzelwelleneinheit erfolgt auf der Ritzelseite in dem Lager 50, das in dem Achsgetriebeaussenteil 51 angeordnet ist und auf der Gegenseite in dem durch die Labyrinthteile 45 und 46 abgedichteten Lager. Zwischen der Hohlwelle 43 und der Ritzelwelle 44 befindet sich auch hier eine Führungsbüchse 47, die zusammen mit der Auflagestelle unter dem lösbaren Doppelkonusring für eine statisch bestimmte Lagerung des Rotors über die Hohlwelle 43 auf der Ritzelwelle 44 sorgt. Die Ritzelwelle 44 selbst ist in den beiden Lagern an ihren Enden statisch bestimmt gelagert. Sie trägt auf der Abtriebsseite das zweigeteilte Ritzel 52, das mit dem Achsgetrieberad 53 kämmt. Ein Axiallager ist bei dieser Ausführung nicht notwendig, da die Pfeilverzahnung des Ritzels 52 und des Gegenrades 53 für die Axialführung sorgt.

Die erfindungsgemässe Hohlwellenlösung für eine Antriebseinheit für Schienenfahrzeuge ist besonders für den Antrieb von Achsen durch Drehstrommotore geeignet. Ohne den Rahmen der Erfindung zu verlassen, können jedoch ebenso andere Fahrmotore verwendet werden. Stets ergibt sich der Vorteil der geringen Baugrösse und der geringen Lagerzahl.

## Patentansprüche

1. Antrieb für elektrische Schienentriebfahrzeuge mit einem den Rotor (Rotorwicklung 3) auf einer zumindest teilweise hohl ausgebildeten Motorwelle (4) aufweisenden Gehäusemotor (1), der eine Treibachse (16) über ein Achsgetriebe antreibt, dessen Gehäuse (17) ein grosses Zahnrad (15) auf der Treibachse (16) und damit kämmend ein Ritzel (14) mit einer Ritzelwelle (5) enthält, die zumindest zum Teil in die Motorwelle (4) hineinragt und mit dieser verbunden ist und zumindest am einen Ende in einem Radiallager (7) steckt, dadurch gekennzeichnet, dass das Gehäuse des Motors (1) und das Getriebegehäuse (17) miteinander starr vereint sind und dass die Ritzelwelle (5) auch am anderen Ende in einem Radiallager (6) steckt und die hohle Motorwelle (4) auf deren gesamter Länge stützt, diese beiden Wellen (4, 5) untereinander eine Führungsbüchse (9) aufweisen und miteinander durch eine einzige Antriebsverbindung (Klemmring 12) lösbar verbunden sind.

2. Antrieb für elektrische Schienentriebfahrzeuge mit einem den Rotor auf einer zumindest teilweise hohl ausgebildeten Motorwelle (20) aufweisenden Gehäusemotor, der eine Treibachse über ein Achsgetriebe antreibt, dessen Gehäuse (34) ein grosses Zahnrad (29) auf der Treibachse und damit kämmend ein Ritzel (31) mit einer Ritzelwelle (23) enthält, die zumindest zum Teil in die Motorwelle (20) hineinragt und mit dieser verbunden ist und zumindest am einen Ende in einem Radiallager steckt, wobei die Motorwelle (20) ritzelseitig ein Radiallager (21) aufweist, dadurch gekennzeichnet, dass das Gehäuse des Motors und das Getriebegehäuse (34) miteinander starr vereint sind, die Motorwelle (20) in einer Bohrung das andere, freie Ende der Ritzelwelle (23) aufnimmt und über eine Führungsbüchse (22) stützt und dass die beiden Wellen (20, 23) miteinander durch eine einzige Antriebsverbindung (Kupplung 24) lösbar verbunden sind.

3. Antrieb nach Anspruch 1 oder 2, dadurch gekennzeichnet, dass die Antriebsverbindung die Motorwelle (4; 20) und die Ritzelwelle (5; 23) vorzugsweise kraftschlüssige zu einer Motor-Ritzelwelleneinheit vereint.

4. Antrieb nach Anspruch 1 und 3, dadurch gekennzeichnet, dass die kraftschlüssige Antriebsverbindung auf der dem Ritzel (14; 52) gegenüberliegenden Seite des Motors (1; 40) angeordnet ist.

5. Antrieb nach einem der Ansprüche 1 bis 3, dadurch gekennzeichnet, dass die Motor-Ritzelwelleneinheit auf der Seite des Ritzels (14; 31) im Achsgetriebegehäuse (17; 34) gelagert ist.

6. Antrieb nach einem der vorhergehenden Ansprüche, dadurch gekennzeichnet, dass der Motor (1) als Doppelmotor ausgebildet ist.

7. Antrieb nach einem der vorhergehenden Ansprüche, dadurch gekennzeichnet, dass er ein Axiallager, insbesondere ein zweireihiges Schulterlager (8; 32), zur Axialeinstellung der Motor-Ritzelwelleneinheit aufweist.

8. Antrieb nach einem der Ansprüche 1 bis 5, dadurch gekennzeichnet, dass Motor (40) und Treibachse parallel zueinander angeordnet sind.

9. Antrieb nach Anspruch 8, dadurch gekennzeichnet, dass das Achsgetriebe (54) als pfeilverzahntes Getriebe ausgebildet ist, dessen Zahnräder (52, 53) insbesondere geteilt ausgeführt sind.

## Claims

1. Drive for electric railway motive power vehicles, with a housing motor (1) comprising the rotor (rotor winding 3) on a motor shaft (4) of at least partly hollow construction, said motor driving a drive axle (16) via an axle gear whose housing (17) contains a large gearwheel (15) on the drive axle (16) and, meshing therewith, a pinion (14) with a pinion shaft (5) which projects at least partly into the motor shaft (4) and is connected to said motor shaft and is inserted at least at one end in a radial bearing (7), characterised in that the housing of the motor (1) and the gear housing (17) are joined rigidly to one another and that the pinion shaft (5) is also arranged at the other end in a radial bearing (6) and supports the hollow motor shaft (4) over the entire length thereof, these two shafts (4, 5) having mutually a guide sleeve (9) and being connected releasably to one another by a single drive connection (clamping ring 12).

2. Drive for electric railway motive power vehicles, with a housing motor comprising the rotor on a motor shaft (20) of at least partly hollow construction, said motor driving a drive axle via an axle gear whose housing (34) contains a large gearwheel (29) on the drive axle and, meshing therewith, a pinion (31) with a pinion shaft (23) which projects at least partly into the motor shaft (20) and is connected to the latter and is arranged at least at one end in a radial bearing, the motor shaft (20) having at the pinion side a radial bearing (21), characterised in that the housing of the motor and the gear housing (34) are joined rigidly to one another, the motor shaft (20) accommodates the other, free end of the pinion shaft (23) in a bore and supports it by means of a guide sleeve (22), and that the two shafts (20, 23) are connected releasably to one another by a single drive connection (coupling 24).

3. Drive according to claim 1 or 2, characterised in that the drive connection joins the motor shaft (4; 20) and the pinion shaft (5, 23) preferably non-positively to constitute a motor and pinion shaft unit.

4. Drive according to claims 1 and 3, characterised in that the non-positive drive connection is situated at the side of the motor (1; 40) opposite from the pinion (14; 52).

5. Drive according to one of claims 1 to 3, characterised in that the motor and pinion shaft unit is mounted at the pinion (14; 31) side in the axle gear housing (17; 34).

6. Drive according to one of the preceding claims, characterised in that the motor (1) is constructed as a double motor.

7. Drive according to one of the preceding claims, characterised in that it comprises an axial bearing, especially a two-row shoulder bearing (8; 32), for the axial adjustment of the motor and pinion shaft unit.

8. Drive according to one of claims 1 to 5, characterised in that the motor (40) and the drive axle are arranged parallel to one another.

9. Drive according to claim 8, characterised in that the axle gear (54) is constructed as a herringbone gear, whose gearwheels (52, 53) are especially of divided construction.

**Revendications**

1. Entraînement pour véhicules électriques sur voies ferrées comportant un moteur sous carter (1) pourvu d'un rotor (enroulement de rotor (3)) sur un arbre de moteur (4) réalisé creux au moins en partie, qui entraîne un essieu moteur (16) par l'intermédiaire d'une transmission d'essieu, dont le carter (17) contient une grosse roue dentée (15) montée sur l'essieu moteur (16), et, en prise avec celle-ci, un pignon (14) pourvu d'un arbre (5) qui pénètre au moins en partie dans l'arbre de moteur (4) et qui est relié à celui-ci, en étant engagé au moins par une extrémité dans un palier radial (7), caractérisé par le fait que le carter du moteur (1) et le carter (17) de la transmission sont reliés rigidement entre eux et que l'arbre (5) de pignon est également engagé par son autre extrémité dans un palier radial (6) et soutient l'arbre creux (4) du moteur sur toute sa longueur, ces deux arbres (4, 5) comportant l'un en dessous de l'autre un manchon de guidage (9) et étant reliés entre eux de façon séparable par une seule liaison d'entraînement (anneau de blocage 12).

2. Entraînement pour véhicules électriques sur voies ferrées comportant un moteur sous carter pourvu d'un rotor placé sur un arbre de moteur (20) réalisé creux au moins en partie, qui entraîne un essieu moteur par l'intermédiaire d'une transmission d'essieu, dont le carter (34) contient une grosse roue dentée (29) montée sur l'essieu moteur et, en prise avec celui-ci, un pignon (31) pourvu d'un arbre de pignon (23), qui pénètre au moins en partie dans l'arbre de moteur (20) et qui est relié à celui-ci, en étant engagé au moins par une extrémité dans un palier radial, l'arbre de moteur (20) comportant, du côté du pignon, un pignon radial (21) caractérisé par le fait que le carter du moteur et le carter de la transmission (34) sont reliés rigidement entre eux, que l'arbre de moteur (20) reçoit dans un alésage l'autre extrémité libre de l'arbre de pignon (23) et le soutient par l'intermédiaire d'un manchon de guidage (22) et que les deux arbres (20, 23) sont reliés entre eux de façon séparable par une seule liaison d'entraînement (accouplement 24).

3. Entraînement selon la revendication 1 ou 2, caractérisé par le fait que la liaison d'entraînement relie l'arbre de moteur (4; 20) et l'arbre de pignon (5; 23) de préférence par transmission de force de contact sous la forme d'un ensemble d'arbres de moteur et de pignon.

4. Entraînement selon les revendications 1 et 3, caractérisé par le fait que la liaison d'entraînement par transmission de force de contact est disposée sur le côté du moteur (1; 40) qui est opposé au pignon (14; 52).

5. Entraînement selon l'une des revendications 1 à 3, caractérisé par le fait que l'ensemble formé par les arbres de moteur et de pignon est monté sur le côté du pignon (14; 31) dans le carter (17; 34) de la transmission d'essieu.

6. Entraînement selon l'une des revendications précédentes, caractérisé par le fait que le moteur (1) est agencé en moteur double.

7. Entraînement selon l'une des revendications précédentes, caractérisé par le fait qu'il comporte un palier axial, notamment un palier à épaulement (8; 32) à double rangée, pour une réglage axial de l'ensemble formé par les arbres de moteur et de pignon.

8. Entraînement selon l'une des revendications 1 à 5, caractérisé par le fait que le moteur (40) et l'essieu moteur sont disposés parallèlement entre eux.

9. Entraînement selon la revendication 8, caractérisé par le fait que la transmission d'essieu (54) est agencée en transmission à denture à chevrons, dont les roues d'engrenage (52, 53) sont, en particulier, réalisées divisés.

FIG. 1

FIG. 2

FIG. 3